# EUROPEAN PATENT APPLICATION

(11) **EP 1 729 362 A1**
(43) Date of publication of application: **06.12.2006**
(21) Application number: 05721405.8
(22) Date of filing: 24.03.2005
(51) Int. Cl.: H01M 6/08, H01M 4/06

(54) **ALKALINE BATTERY**

(30) Priority: 25.03.2004 JP 2004090122
(71) Applicant: MATSUSHITA ELECTRIC INDUSTRIAL CO., LTD., Osaka 571-8501 (JP)
(72) Inventor: MUKAI, Yasuo c/o MEI Co.,Ltd. IPROC, Chuo-ku Osaka-shi Osaka 540-6319 (JP); IZUMI, Hidekatsu c/o MEI Co.,Ltd. IPROC, Chuo-ku Osaka-shi Osaka 540-6319 (JP); SAWADA, Katsuya c/o MEI Co.,Ltd. IPROC, Chuo-ku Osaka-shi Osaka 540-6319 (JP); FUJIWARA, Michiko c/o MEI Co.,Ltd IPROC, Chuo-ku Osaka-shi Osaka 540-6319 (JP); NOYA, Shigeto c/o MEI Co.,Ltd. IPROC, Chuo-ku Osaka-shi Osaka 540-6319 (JP)
(74) Representative: Price, Paul Anthony King
(86) International application number: PCT/JP2005/005391
(87) International publication number: WO 2005/093882

(57) **Abstract**

This invention relates to an alkaline battery including: an electrode assembly composed of a positive electrode, a negative electrode, and a separator; a negative electrode current collector inserted in the negative electrode; an electrolyte of an alkaline aqueous solution contained in the electrode assembly; a battery can for accommodating the electrode assembly, the negative electrode current collector, and the electrolyte; and a sealing member for sealing an opening of the battery can. The ratio of the electrical capacity of the negative electrode to the electrical capacity of the positive electrode is 1.00 to 1.15. The volume obtained by subtracting the volume of the electrode assembly containing the electrolyte and the volume of the negative electrode current collector from the internal volume of the battery that is formed by the battery can and the sealing member constitutes 5 to 15 % of the internal volume.

## Description

### Technical Field

The present invention relates to an alkaline battery that uses manganese dioxide and nickel oxyhydroxide as positive electrode active materials.

### Background Art

An alkaline battery is structured such that a cylindrical positive electrode mixture is disposed in a positive electrode case serving as the positive electrode terminal so as to closely adhere to the positive electrode case and a gelled negative electrode is disposed in the center thereof with a separator interposed therebetween. Recently, the load of devices powered by such batteries has been increasing, and there is accordingly a demand for batteries having excellent heavy-load discharge characteristics. To meet such demand, mixing nickel oxyhydroxide into the positive electrode mixture has been examined to improve heavy-load discharge characteristics.

For example, Patent Document 1 proposes the following battery. A positive electrode mixture containing nickel oxyhydroxide is formed into a cylindrical shape. A negative electrode is placed inside the positive electrode mixture with a separator interposed therebetween, to form an electrode assembly. This electrode assembly is placed into a cylindrical battery can with a bottom, and a sealing unit is fitted to the opening of the battery can for sealing. In consideration of expansion of the nickel oxyhydroxide contained in the positive electrode mixture upon overdischarge, space corresponding to 5 to 10 % of the height of the positive electrode mixture is provided between the sealing unit and the positive electrode mixture.

However, if the ratio of the electrical capacity of the negative electrode to the electrical capacity of the positive electrode is too high, hydrogen gas is produced upon overdischarge, thereby increasing the inner pressure of the battery, which may result in leakage.
Patent Document 1: Japanese Laid-Open Patent Publication No. 2002-198060

### Disclosure of Invention

### Problem That the Invention Is to Solve

It is therefore an object of the present invention to provide an alkaline battery with excellent leakage proof by suppressing gas production due to overdischarge without impairing the discharge capacity.

### Means for Solving the Problem

The present invention relates to an alkaline battery comprising: an electrode assembly that comprises a positive electrode including manganese dioxide and nickel oxyhydroxide as positive electrode active materials, a negative electrode including zinc or a zinc alloy as a negative electrode active material, and a separator interposed between the positive electrode and the negative electrode; a negative electrode current collector inserted in the negative electrode; an electrolyte comprising an alkaline aqueous solution contained in the electrode assembly; a battery can for accommodating the electrode assembly, the negative electrode current collector, and the electrolyte; and a sealing member for sealing an opening of the battery can. The ratio of the electrical capacity of the negative electrode to the electrical capacity of the positive electrode is 1.00 to 1.15. The volume obtained by subtracting the volume of the electrode assembly containing the electrolyte and the volume of the negative electrode current collector from the internal volume of the battery that is formed by the battery can and the sealing member constitutes 5 to 15 % of the internal volume.

The weight ratio between the manganese dioxide and the nickel oxyhydroxide is preferably 20-90:80-10.
The weight ratio between the manganese dioxide and the nickel oxyhydroxide is preferably 40-60:60-40.

### Effects of the Invention

The present invention can provide an alkaline battery with excellent leakage proof by suppressing gas production due to overdischarge without impairing the discharge capacity.

### Brief Description of Drawing

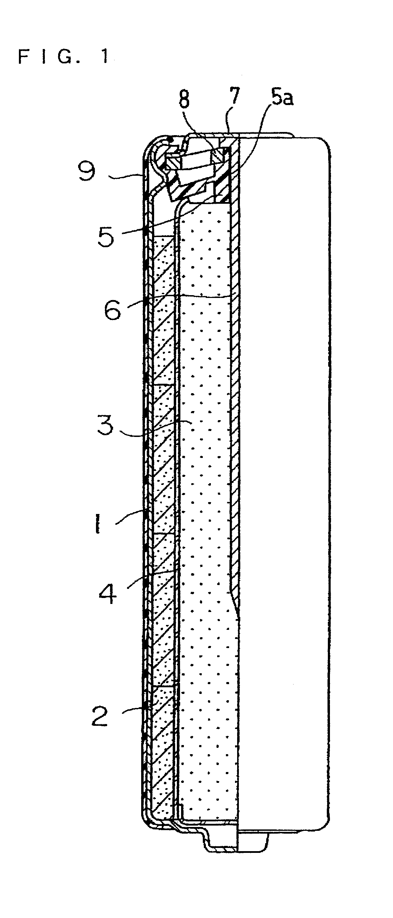

FIG. 1 is a partially sectional front view of an exemplary alkaline battery of the present invention.

### Best Mode for Carrying Out the Invention

Referring now to FIG. 1, one embodiment of the present invention is described. FIG. 1 is a partially sectional front view of a cylindrical alkaline dry battery.
A hollow cylindrical positive electrode 2 is disposed so as to closely adhere to the inner face of a cylindrical battery can 1 with a bottom, which serves as the positive electrode terminal. The positive electrode 2 is, for example, a positive electrode mixture that contains an active material mixture of manganese dioxide and nickel oxyhydroxide and a conductive agent of graphite.

A cylindrical separator 4 with a bottom is disposed inside the positive electrode 2, and a negative electrode 3, into which a negative electrode current collector is inserted, is further disposed inside the separator 4. The negative electrode 3 is, for example, a gelled negative electrode that is prepared by dispersing a zinc or zinc alloy powder as an active material in an alkaline electrolyte containing a gelling agent such as sodium polyacrylate. The zinc alloy is, for example, a zinc alloy containing Bi, In, and Al.
The electrode assembly composed of the positive electrode 2, the negative electrode 3 and the separator 4 contains an electrolyte comprising an alkaline aqueous solution.

The negative electrode current collector 6 is integrated with a sealing member 5, a bottom plate 7 serving as the negative electrode terminal, and an insulating washer 8. The open edge of the battery can 1 is crimped onto the circumference of the bottom plate 7 with the edge of the sealing member 5 interposed therebetween, to seal the opeing of the battery can. The outer surface of the battery can 1 is covered with an outer label 9.

The ratio of the electrical capacity of the negative electrode 3 to the electrical capacity of the positive electrode 2 (hereinafter referred to as "negative electrode capacity/positive electrode capacity") is 1.00 to 1.15.
The electrical capacity of the positive electrode is calculated based on electrochemical equivalent of manganese dioxide (one-electron reaction)(3.24 g/Ah) and the electrochemical equivalent of nickel oxyhydroxide (one-electron reaction)(3.42 g/Ah). Also, the electrical capacity of the negative electrode is calculated based on the electrochemical equivalent of zinc (two-electron reaction)(1.22 g/Ah).

If the negative electrode capacity/positive electrode capacity is less than 1.00, the electrical capacity of the negative electrode is too small, so that the discharge performance degrades. On the other hand, if the negative electrode capacity/positive electrode capacity exceeds 1.15, the electrical capacity of the positive electrode is too small relative to the electrical capacity of the negative electrode, so that hydrogen gas is produced upon overdischarge, thereby increasing the battery inner pressure and promoting the occurrence of leakage.
Further, the negative electrode capacity/positive electrode capacity is preferably 1.05 to 1.15 since sufficient discharge performance is obtained.

The volume obtained by subtracting the volume of the electrode assembly containing the electrolyte and the volume of the negative electrode current collector 6 from the internal volume of the battery that is formed by the battery can 1 and the sealing member 5 (hereinafter referred to as void rate) is 5 to 15 % of the internal volume.

In FIG. 1, a part of the negative electrode current collector 6 is inserted into a hole 5a in the central part of the sealing member 5 and is further exposed to the outside. In this case, the internal volume of the battery means the volume of the inner portion enclosed by the battery can 1 and the sealing member 5 including the hole 5a. Also, the volume of the negative electrode current collector 6 means the volume that the negative electrode current collector 6 occupies in the above-mentioned inner portion of the battery. That is, the volume of the portion of the negative electrode current collector 6 inserted into the hole 5a and the volume of the portion thereof exposed to the outside are excluded.

If the void rate is less than 5%, leakage is likely to occur due to deformation of the sealing member caused by expansion of the positive electrode or an increase in inner pressure caused by production of gas inside the battery. On the other hand, if the void rate exceeds 15%, the amount of active material decreases, thereby resulting in degradation of discharge performance.
Further, the void rate is preferably 5 to 10 % since sufficient discharge performance is obtained.

It is preferred that the positive electrode 2 contain manganese dioxide and nickel oxyhydroxide in a weight ratio of 20-90:80-10. In this case, the production of gas upon overdischarge is suppressed and excellent heavy-load discharge characteristics due to nickel oxyhydroxide can be obtained.
Further, it is more preferred that the positive electrode 2 contain manganese dioxide and nickel oxyhydroxide in a weight ratio of 40-60:60-40.

It is preferred that the positive electrode 2 contain not less than 40 parts by weight of nickel oxyhydroxide per 100 parts by weight of the total of nickel oxyhydroxide and manganese dioxide, since sufficient discharge performance is obtained. Also, in terms of storage characteristics and material costs, it is preferred that the positive electrode 2 contain not more than 60 parts by weight of nickel oxyhydroxide per 100 parts by weight of the total of nickel oxyhydroxide and manganese dioxide.

Examples of the present invention are hereinafter described in detail.

### Example 1

An AA-size alkaline dry battery ZR6 with the same structure as that of FIG. 1 was produced.
The positive electrode 2 was produced as follows. First, manganese dioxide, nickel oxyhydroxide, graphite, and an alkaline electrolyte were mixed together in a weight ratio of 50:50:6:1, fully stirred, and compression-molded into flakes. The positive electrode mixture flakes were crushed into granules, which were then classified into 10 to 100 mesh with a sieve. The obtained granules were compression-molded into a hollow cylindrical shape.

The negative electrode 3 used was a gelled negative electrode that was composed of 1 part by weight of sodium polyacrylate serving as a gelling agent, 33 parts by weight of an alkaline electrolyte, and 66 parts by weight of zinc powder. The separator 4 used was a non-woven fabric composed mainly of polyvinyl alcohol fibers and rayon fibers. The alkaline electrolyte used was a 40% by weight sodium hydroxide aqueous solution.

Batteries 1 to 23 were produced by adjusting the weight of the positive electrode mixture and the weight of the gelled negative electrode so as to vary the negative electrode capacity/positive electrode capacity and the void rate as listed in Table 1. It should be noted that the batteries of this example are batteries 4 to 8, 10 to 14, and 16 to 20, and that the batteries of comparative example are batteries 1 to 3, 9, 15, and 21 to 23.

**[Table 1]**

| Battery No. | Negative electrode capacity/ Positive electrode capacity | Void rate (%) | Number of leaked batteries | Amount of gas produced (cm³) | Discharge performance index |
|---|---|---|---|---|---|
| 1 | 0.95 | 15.0 | 0 | 0.9 | 81 |
| 2 | 0.95 | 5.0 | 0 | 0.8 | 84 |
| 3 | 1.00 | 17.5 | 0 | 0.6 | 79 |
| 4 | 1.00 | 15.0 | 0 | 0.9 | 90 |
| 5 | 1.00 | 12.5 | 0 | 0.8 | 91 |
| 6 | 1.00 | 10.0 | 0 | 0.6 | 93 |
| 7 | 1.00 | 7.5 | 0 | 0.5 | 94 |
| 8 | 1.00 | 5.0 | 0 | 0.4 | 95 |
| 9 | 1.00 | 2.5 | 10 | 0.3 | 100 |
| 10 | 1.05 | 15.0 | 0 | 0.9 | 93 |
| 11 | 1.05 | 5.0 | 0 | 0.8 | 100 |
| 12 | 1.10 | 15.0 | 0 | 0.9 | 95 |
| 13 | 1.10 | 10.0 | 0 | 0.6 | 100 |
| 14 | 1.10 | 5.0 | 0 | 0.4 | 105 |
| 15 | 1.15 | 17.5 | 0 | 1.1 | 84 |
| 16 | 1.15 | 15.0 | 0 | 0.9 | 97 |
| 17 | 1.15 | 12.5 | 0 | 0.8 | 99 |
| 18 | 1.15 | 10.0 | 0 | 0.6 | 103 |
| 19 | 1.15 | 7.5 | 0 | 0.5 | 106 |
| 20 | 1.15 | 5.0 | 0 | 0.4 | 108 |
| 21 | 1.15 | 2.5 | 20 | 0.3 | 115 |
| 22 | 1.20 | 15.0 | 40 | 10.5 | 101 |
| 23 | 1.20 | 5.0 | 80 | 11.5 | 113 |

### [Battery evaluation]

### (1) Evaluation of discharge performance

The batteries were continuously discharged at a constant power of 1 W in a 20°C environment until their voltages lowered to 1.0 V. The obtained discharge performance was expressed as an index by defining the discharge time of the battery 13 as 100. When the index is 85 or higher, the discharge performance was judged excellent.

### (2) Evaluation of leakage proof

Ten-day continuous discharge was performed at a load of 10Ω in an environment with a temperature of 30°C and a humidity of 90%. After the discharge, the batteries were disassembled in water, and gas accumulated in the batteries was collected into a graduated cylinder to check the amount of gas produced. Also, after the discharge, the number of leaked batteries was checked. The number of batteries checked was 100.
Table 1 shows the evaluation results. When the negative electrode capacity/positive electrode capacity is 1.00 to 1.15 and the void rate is 5 to 15 %, excellent leakage proof and discharge performance were obtained.

### Example 2

Alkaline dry batteries 24 to 55 were produced under the same conditions as those of Example 1 except that the weight ratio between manganese dioxide and nickel oxyhydroxide was varied as listed in Table 2. The batteries were evaluated under the same conditions as those of Example 1. Table 2 shows the evaluation results.

**[Table 2]**

| Battery No. | Weight ratio between manganese dioxide and nickel oxyhydroxide | Negative electrode capacity/ Positive electrode capacity | Void rate (%) | Number of leaked batteries | Amount of gas produced (cm³) | Discharge performance index |
|---|---|---|---|---|---|---|
| 24 | 100:0 | 1.00 | 15.0 | 0 | 0.9 | 81 |
| 25 | 100:0 | 1.00 | 5.0 | 0 | 0.4 | 83 |
| 26 | 100:0 | 1.15 | 15.0 | 0 | 0.9 | 90 |
| 27 | 100:0 | 1.15 | 5.0 | 0 | 0.4 | 95 |
| 28 | 90:10 | 1.00 | 15.0 | 0 | 0.9 | 85 |
| 29 | 90:10 | 1.00 | 5.0 | 0 | 0.4 | 89 |
| 30 | 90:10 | 1.15 | 15.0 | 0 | 0.9 | 92 |
| 31 | 90:10 | 1.15 | 5.0 | 0 | 0.4 | 100 |
| 32 | 80:20 | 1.00 | 15.0 | 0 | 0.9 | 87 |
| 33 | 80:20 | 1.00 | 5.0 | 0 | 0.4 | 92 |
| 34 | 80:20 | 1.15 | 15.0 | 0 | 0.9 | 94 |
| 35 | 80:20 | 1.15 | 5.0 | 0 | 0.4 | 104 |
| 36 | 60:40 | 1.00 | 15.0 | 0 | 0.9 | 90 |
| 37 | 60:40 | 1.00 | 5.0 | 0 | 0.4 | 94 |
| 38 | 60:40 | 1.15 | 15.0 | 0 | 0.9 | 97 |
| 39 | 60:40 | 1.15 | 5.0 | 0 | 0.4 | 107 |
| 40 | 40:60 | 1.00 | 15.0 | 0 | 0.9 | 92 |
| 41 | 40:60 | 1.00 | 5.0 | 0 | 0.4 | 97 |
| 42 | 40:60 | 1.15 | 15.0 | 0 | 0.9 | 99 |
| 43 | 40:60 | 1.15 | 5.0 | 0 | 0.4 | 110 |
| 44 | 20:80 | 1.10 | 15.0 | 0 | 0.9 | 95 |
| 45 | 20:80 | 1.10 | 5.0 | 0 | 0.4 | 100 |
| 46 | 20:80 | 1.15 | 15.0 | 0 | 0.9 | 102 |
| 47 | 20:80 | 1.15 | 5.0 | 0 | 0.4 | 112 |
| 48 | 10:90 | 1.00 | 15.0 | 0 | 0.9 | 97 |
| 49 | 10:90 | 1.00 | 5.0 | 0 | 0.4 | 102 |
| 50 | 10:90 | 1.15 | 15.0 | 5 | 9.5 | 105 |
| 51 | 10:90 | 1.15 | 5.0 | 15 | 10.0 | 114 |
| 52 | 0:100 | 1.00 | 15.0 | 0 | 0.9 | 100 |
| 53 | 0:100 | 1.00 | 5.0 | 0 | 0.4 | 105 |
| 54 | 0:100 | 1.15 | 15.0 | 10 | 10.0 | 107 |
| 55 | 0:100 | 1.15 | 5.0 | 30 | 10.5 | 115 |

When the weight ratio between manganese dioxide and nickel oxyhydroxide is 20-90:80-10, excellent leakage proof and discharge performance were obtained.

### Industrial Applicability

The alkaline battery of the present invention is preferably used as a power source for electronic devices, such as telecommunication devices and portable appliances.

## Claims

1. An alkaline battery comprising:
an electrode assembly comprising a positive electrode including manganese dioxide and nickel oxyhydroxide as positive electrode active materials, a negative electrode including zinc or a zinc alloy as a negative electrode active material, and a separator interposed between said positive electrode and said negative electrode;
a negative electrode current collector inserted in said negative electrode;
an electrolyte comprising an alkaline aqueous solution contained in said electrode assembly;
a battery can for accommodating said electrode assembly, said negative electrode current collector, and said electrolyte; and
a sealing member for sealing an opening of said battery can,
wherein the ratio of the electrical capacity of said negative electrode to the electrical capacity of said positive electrode is 1.00 to 1.15, and
the volume obtained by subtracting the volume of the electrode assembly containing the electrolyte and the volume of the negative electrode current collector from the internal volume of the battery that is formed by the battery can and the sealing member constitutes 5 to 15 % of said internal volume.
2. The alkaline battery in accordance with claim 1, wherein the weight ratio between said manganese dioxide and said nickel oxyhydroxide is 20-90:80-10.
3. The alkaline battery in accordance with claim 1, wherein the weight ratio between said manganese dioxide and said nickel oxyhydroxide is 40-60:60-40.
